Europäisches Patentamt

European Patent Office

Office européen des brevets

(19)

(11) Veröffentlichungsnummer : **0 072 396**
**B1**

(12)

# EUROPÄISCHE PATENTSCHRIFT

(45) Veröffentlichungstag der Patentschrift :
30.10.85

(21) Anmeldenummer : 82104586.1

(22) Anmeldetag : 26.05.82

(51) Int. Cl.⁴ : **C 01 B 33/28, B 01 J 20/18**

---

(54) **Zeolithgranulat, Verfahren zu seiner Herstellung und Verwendung.**

---

(30) Priorität : 17.08.81 DE 3132379

(43) Veröffentlichungstag der Anmeldung :
23.02.83 Patentblatt 83/08

(45) Bekanntmachung des Hinweises auf die Patenterteilung : 30.10.85 Patentblatt 85/44

(84) Benannte Vertragsstaaten :
AT BE CH DE FR GB IT LI LU NL SE

(56) Entgegenhaltungen :
DE-A- 2 651 485
DE-B- 1 186 448
DE-B- 1 792 743
DE-B- 1 944 879
Die Akte enthält technische Angaben, die nach dem Eingang der Anmeldung eingereicht wurden und die nicht in dieser Patentschrift enthalten sind.

(73) Patentinhaber : **Degussa Aktiengesellschaft**
**Weissfrauenstrasse 9**
**D-6000 Frankfurt am Main 1 (DE)**

(72) Erfinder : **Strack, Hans, Dr.**
**Riemenschneiderstrasse 1**
**D-8755 Alzenau (DE)**
Erfinder : **Kleinschmit, Peter, Dr.**
**Wildaustrasse 19**
**D-6450 Hanau 9 (DE)**
Erfinder : **Parr, Erfried**
**Somborner Strasse 27**
**D-6458 Rodenbach 2 (DE)**

EP 0 072 396 B1

**Beschreibung**

Die Erfindung betrifft ein Zeolithgranulat, das Verfahren zu seiner Herstellung durch Verformen von Zeolith mit Alkalisilikatlösungen sowie Verwendung des Zeolithgranulates bei der Herstellung von Isolierglasfenster.

Es ist bekannt, gebundene zeolithische Molekularsiebe mit Hilfe von Wasserglas herzustellen, indem man einen kristallinen Zeolith gemeinsam mit Alkalisilikat, vorzugsweise Kaliumsilikat, mit einem Modul von $Me_2O : SiO_2 = 1 : 3$ bis $1 : 5$, verformt, das verformte Produkt mit einem Luftstrom, der mindestens 200 ppm Kohlendioxid und einen Wasserdampfpartialdruck von mindestens 10 mm Hg aufweist, bei Temperaturen von 40 bis 300 °C trocknet, anschliessend mit einer 0,1-30 %igen Natriumsalzlösung und/oder Wasser wäscht und bei Temperaturen über 200 °C aktiviert (vgl. DE-B-1 792 743).

Dieses Verfahren weist den Nachteil auf, daß das so erhaltene Zeolithgranulat einem zusätzlichen Waschschritt und einem zusätzlichen Trockenschritt unterzogen werden muß, und in dieser Form trotzdem nicht die für einen A-Zeolithen typisch hohe Adsorptionskapazität für Wasserdampf erreicht.

Gegenstand der Erfindung ist ein Zeolithgranulat vom Typ Zeolith NaA mit höherer Wasserkapazität.

Das erfindungsgemäße Zeolithgranulat vom Typ NaA ist durch die folgenden Parameter gekennzeichnet :

Adsorptionsdaten : (p/po = 0.8, 20 °C)

| | |
|---|---|
| $H_2O$ | > 22 % |
| $NH_3$ | > 11 % |
| $CO_2$ | ≤ 0,1 % |
| $O_2$ | ≤ 0,1 % |
| $N_2$ | ≤ 0,1 % |
| Ar | ≤ 0,1 % |
| $CH_3OH$ | ≤ 0,2 % |
| $CH_3\!-\!CH_2\!-\!OH$ | ≤ 0,2 % |

Das erfindungsgemäße Zeolithgranulat kann hergestellt werden, indem man pulverförmigen Zeolith A in einem Mischer vorlegt, Natriumsilikatlösung hinzugibt, solange mischt, bis man ein Zeolithgranulat mit einer Korngröße von wenigstens 0,1 mm erhält, dieses Granulat gegebenenfalls nachrollt, das feuchte Zeolithgranulat zunächst bei Temperaturen von 20 bis 39 °C trocknet, wobei man den Kohlendioxidgehalt der Trockenluft auf weniger als 200 ppm einstellt, anschließend in einem zweiten Trockenschritt bei Temperaturen von 40-120 °C und gegebenenfalls in einen dritten Trockenstufe bei 121°-200 °C unter sonst gleichen Bedingungen trocknet und anschließend das so erhaltene Granulat bei Temperaturen von höchstens 600 °C, beispielsweise in einem Drehrohr, aktiviert.

Als Zeolith A kann ein pulverförmiger Zeolith, der gemäß DE-A-2 447 021, DE-A-2 517 218, DE-A-2 651 419, DE-A-2 651 420, DE-A-2 651 436, DE-A-2 651 437, DE-A-2 651 445 und/oder DE-A-2 651 485 hergestellt wurde und die dort aufgeführte Teilchengrößenverteilung aufweist, eingesetzt werden.

Vorzugsweise wird ein Zeolithpulver des typs A gemäß DE-A-2 651 485 verwendet.

Der Wassergehalt des Zeolithen kann 0-27 %, bevorzugt 15 bis 22 % betragen. Als Alkalisilikatlösung kann bevorzugt eine Natriumsilikatlösung, die einen Modul $SiO_2 : Na_2O$ von 1,0 bis 3,4 und einen Gehalt an $Na_2O$ von 2-20 Gew.-% und an $SiO_2$ von 5-31 Gew.-% aufweist, eingesetzt werden.

Das Gemisch aus Zeolith A und Wasserglas enthält die Komponente $Na_2O : Al_2O_3 : SiO_2 : H_2O$ im Verhältnis $1,2 \pm 0,2\ Na_2O : Al_2O_3 : 2,4 \pm 0,4\ SiO_2 : 12 \pm 3\ H_2O$.

Als Mischer können handelsübliche Mischer eingesetzt werden, die vorzugsweise eine Aufdüsvorrichtung enthalten, wie Pflugscharmischer, Schneckenmischer, Mischgranulatoren, u. ä.

Als Nachrollvorrichtung kann ein dem Fachmann geläufiges Aggregat, wie Granulierteller, Dragiertrommel u. ä., verwendet werden. Hierbei wird eine mechanische Verdichtung und Abrundung des Granulates sowie eine Verengung der Korngrößenverteilung erzielt.

Die Trocknung des Zeolithgranulates kann in bekannten Vorrichtungen, wie Trockenschränken, Bandtrocknern, Wirbelschichttrockner kontinuierlich oder diskontinuierlich durchgeführt werden. Vorzugsweise wird ein Wirbelschichttrockner eingesetzt, da hierbei gleichzeitig eine Entstaubung des Granulates erzielt wird. Die Abluft des Trocknungsschrittes kann im Kreislauf geführt werden, wobei zur Einstellung des Kohlendioxidgehaltes von weniger als 200 ppm die Trocknungsabluft mit der entsprechenden Menge an Frischluft vermischt wird.

Die Trocknung kann ebensogut in einem Inertgasstrom, wie Stickstoff, durchgeführt werden, d. h., die Anwesenheit von Kohlendioxid ist nicht notwendig.

Das Trocknungsgas kann einen Wasserdampfpartialdruck von 0,01 mm Hg bis 750 mm Hg aufweisen, wobei der Partialdruck des Wasserdampfes im Trocknungsgas unterhalb des Sättigungsdruckes bei der entsprechenden Trockentemperatur liegen muß. Gegebenenfalls folgt eine Siebung mit bekannten Siebvorrichtungen, wobei die Siebung wahlweise an feuchtem oder an getrocknetem Granult durchgeführt werden kann. Im Falle der Feuchtsiebung muß eine mechanische Zerstörung des Granulates vermieden werden, jedoch kann hierbei das Fehlkorn (Über- und Unterkorn) leicht mechanisch zerkleinert und in den Granulationsprozeß rückgeführt werden. Das getrocknete Zeolithgranulat kann bei Temperaturen von 300 °C bis 500 °C, höchstens 600 °C in bekannten Apparaten, wie Muffelofen, Drehrohr, Röhrenofen o. ä kontinuierlich oder diskontinuierlich aktiviert werden.

Das erfindungsgemäße Zeolithgranulat vom Typ NaA ist besonders geeignet als Trockenmittel für Isolierglasfenster.

Bekanntermassen hat K-A-Zeolithgranulat an sich universelle eigenschaften für Isoliergläser (Firmenprospekt der BAYER AG, Leverkusen « Baylith, das Molekularsieb für den Isolierglassektor », Seite 4, Ausgabe 8/80, Best. Nr. AC 1358), da es selektiv nur Wasser, nicht jedoch andere Gase, wie Stickstoff oder Argon adsorbiert. Das zumeist verwendete handelsübliche NaA-Granulat adsorbiert indessen neben Wasser auch Stickstoff und Argon, sodaß für die Herstellung von Argongefüllten Scheiben K-A Zeolith verwendet werden muß. Dieses Zeolithgranulat hat jedoch den Nachteil, daß es, aus NaA Zeolith durch Ionenaustausch mit Kaliumsalzlösung hergestellt wird, und daher wesentlich teurer als NaA-Zeolithgranulat ist.

Das erfindungsgemäße NaA-Zeolithgranulat besitzt nun aber überraschenderweise die universellen Eigenschaften des K-A-Granulates und ist dabei technisch wesentlich einfacher herzustellen, weil erfindungsgemäß auf den Ionenaustausch verzichtet wird.

Beispiel 1

In einem Schneckenmischer werden 100 kg Zeolith A (DE-A-2 651 485, 21 % Wassergehalt) vorgelegt. Hierzu werden 49 kg Wasserglas (Modul 3,38, $Na_2O$ = 4,8 Gew.-%, $SiO_2$ = 15,7 Gew.-%) zugedüst. Man erhält ein Granulat mit einer Korngröße von 0,1 bis 3 mm, das anschließend in einem Granulierteller nachgerollt wird. Man erhält so ein engeres Kornspektrum (0,3-2,5 mm). Das Granulat wird im feuchten Zustand in Kornfraktionen < 1 mm, 1-2 mm und < 2 mm gesiebt.

Die Kornfraktion von 1-2 mm wird in einem Fließbetttrockner in einer ersten Stufe bei 35 °C und einer zweiten Stufe bei 110 °C getrocknet. Hierbei wird ein Teil der Abluft im Kreis geführt, sodaß der $CO_2$-Gehalt der Luft 150 ppm beträgt. Der Wasserdampfpartialdruck beträgt in der ersten Stufe 21 mm Hg und in der zweiten Stufe 117 mm Hg. Das Granulat wird in einem Drehrohr bei 420 °C aktiviert.

Das Produkt hat folgende Eigenschaften :

| | |
|---|---|
| Korngröße | 1-2 mm |
| Aussehen | rund, weiß, staubfrei |
| Bruchfestigkeit | mind. 2 kg (1 mm Perle) |
| Adsorptionsdaten | (p/po = 0,8 20 °C) |
| $H_2O$ | 23,4 % |
| $NH_3$ | 12,0 % |
| $CO_2$, $O_2$, $N_2$, Ar | < 0,1 % |
| Méthanol, Ethanol | < 0,2 % |

Beispiel 2

12 kg Zeolith A (DE-A-2 651 485, 10,1 % Wassergehalt) werden mit 8,4 kg Natriumsilikatlösung (8,4 % $Na_2O$, 8,0 % $SiO_2$, Modul 1,0) wie unter Beispiel 1 gemischt, granuliert und im Trockenschrank zunächst bei 30 °C, dann bei 110 °C getrocknet. Nach der Aktivierung im Muffelofen bei 400 °C zeigt die Probe folgende Adsorptionsdaten : (p/po = 0,8 20 °C)

| | |
|---|---|
| $H_2O$ | 28,9 % |
| $NH_3$ | 14,2 % |
| $CO_2$, $O_2$, $N_2$, Ar | 0,1 % |
| Ethanol | 0,1 % |
| Methanol | 0,15 % |

Beispiel 3

(Vergleichsbeispiel)

In einem Granulierteller werden gleichzeitig 5 kg/h Zeolith A (DE-A-2 447 021, 16,2 o/o Wasser) über eine Schüttelrinne und 2.1 kg/h Natriumsilikat (12,5 o/o $Na_2O$, 22,2 o/o $SiO_2$, Modul 1.83) über eine Düse dosiert und durch Aufbaugranulation pelletisiert. Nach dem Trocknen und Aktivieren gemäß Beispiel 1 erhält man folgende Adsorptionsdaten : (p/po = 0,8 20 °C)

| | |
|---|---|
| $H_2O$ | 17,8 % |
| $NH_3$ | 8,0 % |
| $CO_2$, $O_2N_2Ar$ Methanol, Ethanol | < 0,1 % |

Beispiel 4

Das nach Beispiel 1 erhaltene feuchte Granulat wird in einem waagerecht liegenden, beheizbaren Glasrohr in einen Strom von Reinststickstoff (Wasserdampfpartialdruck 0,1 mm Hg) zunächst bei 22 °C, dann bei 110 °C getrocknet und in dem gleichen Apparat unter weiterer Durchleitung von Stickstoff bei 400 °C aktiviert.

Adsorptionsdaten : (p/po = 0,8  20 °C)

| | |
|---|---|
| $H_2O$ | 23,0 % |
| $NH_3$ | 12,2 % |
| $N_2$, $O_2$, $CO_2$, Ar | 0,1 % |
| Methanol, Ethanol | 0,12 % |

**Patentansprüche**

1. Zeolithgranulat vom Typ Zeolith NaA, gekennzeichnet durch die folgenden Parameter :

Adsorptionsdaten : (p/po = 0,8, 20 °C)

| | |
|---|---|
| $H_2O$ | > 22 % |
| $NH_3$ | > 11 % |
| $CO_2$ | ⩽ 0,1 % |
| $O_2$ | ⩽ 0,1 % |
| $N_2$ | ⩽ 0,1 % |
| Ar | ⩽ 0,1 % |
| $CH_3OH$ | ⩽ 0,2 % |
| $CH_3—CH_2—OH$ | ⩽ 0,2 % |

2. Verfahren zur Herstellung des Zeolithgranulates gemäß Anspruch 1, dadurch gekennzeichnet, daß man pulverförmigen Zeolith A in einem Mischer vorlegt, Natriumsilikatlösung hinzugibt, solange mischt, bis man ein Zeolithgranulat mit einer Korngröß von wenigstens 0,1 mm erhält, dieses Granulat gegebenenfalls nachrollt, das feuchte Zeolithgranulat zunächst bei Temperaturen von 20 bis 39 °C trocknet, wobei man den Kohlendioxidgehalt der Trockenluft auf weniger als 200 ppm einstellt, anschließend in einem zweiten Trockenschritt bei Temperaturen von 40 bis 120 °C und gegebenenfalls in einer dritten Trockenstufe bei 121° bis 200 °C unter sonst gleichen Bedingungen trocknet und anschließend das so erhaltene Granulat bei Temperaturen von höchsten 600 °C aktiviert.

3. Verwendung des Zeolithgranulates gemäß Anspruch 1 bei der Herstellung von Isolierglasfenstern als Trockenmittel.

**Claims**

1. Zeolite granulate of the type zeolite NaA, characterised by the following parameters :

Adsorption data : (p/po = 0.8, 20 °C)

| | |
|---|---|
| $H_2O$ | > 22 % |
| $NH_3$ | > 11 % |
| $CO_2$ | ⩽ 0.1 % |
| $O_2$ | ⩽ 0.1 % |
| $N_2$ | ⩽ 0.1 % |
| Ar | ⩽ 0.1 % |
| $CH_3OH$ | ⩽ 0.2 % |
| $CH_3—CH_2—OH$ | ⩽ 0.2 % |

2. A process for the production of a zeolite granulate according to claim 1, characterised in that pulverulent zeolite A is placed in a mixing apparatus, sodium silicate solution is added and mixed until a zeolite granulate with a minimum grain size of 0.1 mm is obtained, which is optionally subsequently rolled, the moist zeolite granulate is then dried at a temperature of from 20 to 39 °C, the carbon dioxide content of the drying air being adjusted to less than 200 ppm, then dried in a second drying stage at a temperature of from 40 °C to 120 °C and optionally in a third drying stage at a temperature of from 121 °C to 200 °C under otherwise identical conditions and the granulate obtained in this manner is subsequently activated at a maximum temperature 600 °C.

3. The use of a zeolite granulate according to claim 1 as drying agent in the production of insulating glass windows.

**Revendications**

1. Granulé de zéolithe du type Zéolithe NaA, caractérisé en ce qu'il offre les paramètres suivants :

caractéristiques d'adsorption (p/po = 0,8, 20 °C)

| | |
|---|---|
| $H_2O$ | $> 22$ % |
| $NH_3$ | $> 11$ % |
| $CO_2$ | $\leqslant 0,1$ % |
| $O_2$ | $\leqslant 0,1$ % |
| $N_2$ | $\leqslant 0,1$ % |
| Ar | $\leqslant 0,1$ % |
| $CH_3OH$ | $\leqslant 0,2$ % |
| $CH_3\!-\!CH_2\!-\!OH$ | $\leqslant 0,2$ % |

2. Procédé pour la préparation du granulé de zéolithe suivant la revendication 1, caractérisé en ce que l'on met en place de la zéolithe A dans un mélangeur, y ajoute une solution de silicate de sodium, mélange jusqu'à ce qu'on obtienne un granulé de zéolithe en grains d'une grosseur d'au moins 0,1 mm, fait rouler encore ce granulé éventuellement pour l'arrondir, sèche d'abord le granulé humide de zéolithe à des températures de 20 à 39 °C, la teneur en dioxyde de carbone de l'air sec étant ajustée à moins de 200 ppm, sèche ensuite dans une seconde étape de séchage à des températures de 40 à 120 °C, et éventuellement dans une troisième étape à 121 à 200 °C, toujours dans les mêmes conditions pour le reste, puis active le granulé ainsi obtenu à des températures de 600 °C au maximum.

3. Utilisation du granulé de zéolithe suivant la revendication 1 dans la fabrication de fenêtres à glaces isolantes comme agent de séchage.